# EUROPEAN PATENT APPLICATION

(11) **EP 3 950 634 A1**
(43) Date of publication of application: **09.02.2022**
(21) Application number: 20784754.2
(22) Date of filing: 26.03.2020
(51) Int. Cl.: C04B 2/10, C10B 39/02

(54) **METHOD AND APPARATUS FOR PRODUCING QUICK LIME USING COKE DRY QUENCHING FACILITY AND HEAT EXCHANGER**

(30) Priority: 29.03.2019 JP 2019067830
(71) Applicant: JFE Steel Corporation, Tokyo 100-0011 (JP)
(72) Inventor: KAMURA Ryo, Tokyo 100-0011 (JP); OKAMOTO Hirotaka, Tokyo 100-0011 (JP); MATSUMURA Kenji, Tokyo 100-0011 (JP); KUSUMOTO Hisao, Tokyo 100-0011 (JP); IWATA Koji, Tokyo 100-0011 (JP); SUGANO Takahiro, Tokyo 100-0011 (JP)
(74) Representative: Grünecker Patent- und Rechtsanwälte PartG mbB
(86) International application number: PCT/JP2020/013615
(87) International publication number: WO 2020/203630

(57) **Abstract**

There are provided a method and an apparatus for producing quick lime using a coke dry quenching equipment and a heat exchanger, which can produce quick lime in a good heat efficiency and a simple configuration. A heated circulating gas that has been heated by cooling a red-hot coke in a coke dry quenching equipment is fed to a heat exchanger, and air is heated by the heated circulating gas in the heat exchanger to produce a heated gas, and the resulting heated gas is fed to a lime firing furnace. A limestone is thermally decomposed by the heated gas fed to the lime firing furnace to produce quick lime, while a cooled circulating gas obtained by cooling the heated circulating gas through the heating of air in the heat exchanger is fed to the coke dry quenching equipment and used as a cooled circulating gas for cooling the red-hot coke.

## Description

### Technical Field

This invention relates to a method for producing quick lime, and more particularly to a method and an apparatus for producing quick lime using a coke dry quenching equipment and a heat exchanger.

### Background Art

Conventional methods for producing quick lime commonly use a method for producing quick lime (CaO) by thermal decomposition (CaCO₃ → CaO + CO₂) of limestone (CaCO₃) using a vertical furnace such as Merz furnace, Beckenbach furnace and the like or a rotary kiln furnace (see Non-Patent Literature 1). This method requires heat energy of theoretical heat quantity: 766 kcal/kg-CaO for the thermal decomposition. In the conventional production methods for producing quick lime, therefore, the heat energy required for every furnace is supplied from the outside using heavy oil, coal, LNG, coke and so on as a fuel as shown in the following Table 1. In order to produce quick lime by the above conventional production method of producing quick lime, it is necessary to supply heat energy for the thermal decomposition of limestone from the outside, causing a problem that heat efficiency is poor.

**Table 1**

| | Rotary kiln furnace | Vertical furnace (Merz furnace) | Vertical furnace (Beckenbach furnace) |
|---|---|---|---|
| Unit consumption (kcal/kg-CaO) | 1100-1150 | 890 | 920-950 |
| Kind of fuel | Heavy oil, coal, LNG | Heavy oil | Heavy oil, coke |

On the other hand, a coke dry quenching equipment (CDQ) is usually used for cooling red-hot coke formed in a coke furnace to recover heat energy from sensible heat of the red-hot coke. As a method for producing quick lime in consideration of heat efficiency, there is known a method of charging red-hot coke to be cooled together with limestone into a prechamber of the coke dry quenching equipment to produce quick lime by using sensible heat of the coke (see Patent Literature 1).

### Citation List

### Patent Literature

Patent Literature 1: JP-A-2004-262724

### Non-Patent Literature

Non-Patent Literature 1: Gypsum & Lime Handbook (edited by Gypsum & Lime Institute, 1972), pp 478-505

### Summary of Invention

### Technical Problem

However, the method in Patent Literature 1 of charging limestone together with red-hot coke into the prechamber has a problem that sensible heat of usable coke is small. Also, the decomposition reaction from limestone to quick lime (CaCO₃ → CaO + CO₂) occurs at a temperature of not lower than 800°C, and hence only sensible heat of coke of not lower than 800°C can be used. Further, limestone is mixed with red-hot coke to conduct thermal decomposition of the limestone, so that it is difficult to separate quick lime from the coke. There is another problem that limestone generates heat by absorbing moisture in a gas for cooling coke and the coke is not cooled sufficiently. Moreover, there is another problem that limestone is charged into a cooling tower of the coke dry quenching equipment to thus exert an influence on the amount of the coke to be cooled.

An object of the present invention is to provide a method and an apparatus for producing quick lime using a coke dry quenching equipment and a heat exchanger, in which sensible heat of red-hot coke can be utilized effectively to produce quick lime in a good heat efficiency and a simple configuration. Solution to Problem

The inventors have made various studies to solve the above problems inherent in the conventional techniques and achieve the above object, and as a result, have developed a novel method for producing quick lime using a coke dry quenching equipment and a heat exchanger.

That is, the invention is a method for producing quick lime using a coke dry quenching equipment and a heat exchanger, in which
the quick lime is produced by
feeding a heated circulating gas that has been heated by cooling a red-hot coke in the coke dry quenching equipment to the heat exchanger,
heating air using the heated circulating gas by the heat exchanger to produce a heated gas, and
feeding the heated gas to a lime firing furnace to conduct thermal decomposition of limestone by the heated gas, and also
a cooled circulating gas obtained by the cooling of the heated circulating gas by the heating of air in the heat exchanger is fed to the coke dry quenching equipment and used to cool the red-hot coke.

In the method for producing quick lime using a coke dry quenching equipment and a heat exchanger according to the invention having the above configuration, the followings are considered to be more preferable solution means:
(1) the heated gas heated by the heated circulating gas in the heat exchanger is heated by a heating burner;
(2) the heated gas heated by the heated circulating gas in the heat exchanger is heated by the heating burner based on a ratio of O₂ concentration, CO concentration, CO₂ concentration and H₂ concentration in an exhaust gas disposed in the lime firing furnace;
(3) the heated gas heated by the heated circulating gas in the heat exchanger is heated by the heating burner based on a temperature of the exhaust gas disposed in the lime firing furnace;
(4) the heated circulating gas after the cooling of the red-hot coke is passed through a dust collector;
(5) the lime firing furnace is a vertical furnace or a rotary kiln furnace.

Moreover, the invention is an apparatus for producing quick lime using a coke dry quenching equipment and a heat exchanger comprising
a coke dry quenching equipment for discharging a heated circulating gas that has been heated by cooling a red-hot coke,
a heat exchanger for heating air by the discharged heated circulating gas to produce a heated gas and cooling the heated circulating gas by the heating of air to produce and discharge a cooled circulating gas, and
a lime firing furnace for thermally decomposing limestone by the heated gas produced in the heat exchanger to produce quick lime, in which the cooled circulating gas discharged from the heat exchanger is again used to cool the red-hot coke in the coke dry quenching equipment.

In the apparatus for producing quick lime using a coke dry quenching equipment and a heat exchanger according to the invention having the above configuration, the followings are considered to be more preferable solution means:
(1) the heated gas heated by the heated circulating gas in the heat exchanger is heated by a heating burner and fed to the lime firing furnace;
(2) the heated circulating gas after the cooling of the red-hot coke is passed through a dust collector;
(3) the lime firing furnace is a vertical furnace or rotary kiln furnace.

### Advantageous Effects of Invention

In the method and apparatus for producing quick lime using a coke dry quenching equipment and a heat exchanger according to the invention, the heat exchanger heats air by using the sensible heat of the circulating gas in the coke dry quenching equipment to obtain heated gas and uses the obtained heated gas to produce quick lime from limestone. Therefore, a great amount of sensible heat can be used as compared to Patent Literature 1 where limestone is charged into the prechamber. When limestone is charged into the prechamber, available sensible heat coke is 800°C to 1000°C, whereas, when the sensible heat of the circulating gas is used, the sensible heat of 200°C to 800°C can be further utilized. Also, since the cooling of coke and the production of quick lime are performed independently, there is no need to separate coke from quick lime. Further, the sensible heat of the red-hot coke can be utilized effectively.

### Brief Description of Drawings

FIG. 1 is a schematic view illustrating the configuration of an example of a production apparatus for carrying out a method for producing quick lime using a coke dry quenching equipment and a heat exchanger according to the invention.
FIG. 2 is a schematic view illustrating the configuration of another example of a production apparatus for carrying out a method for producing quick lime using a coke dry quenching equipment and a heat exchanger according to the invention.

### Description of Embodiments

There will be described a method and an apparatus for producing quick lime using a coke dry quenching equipment and a heat exchanger according to the invention below.

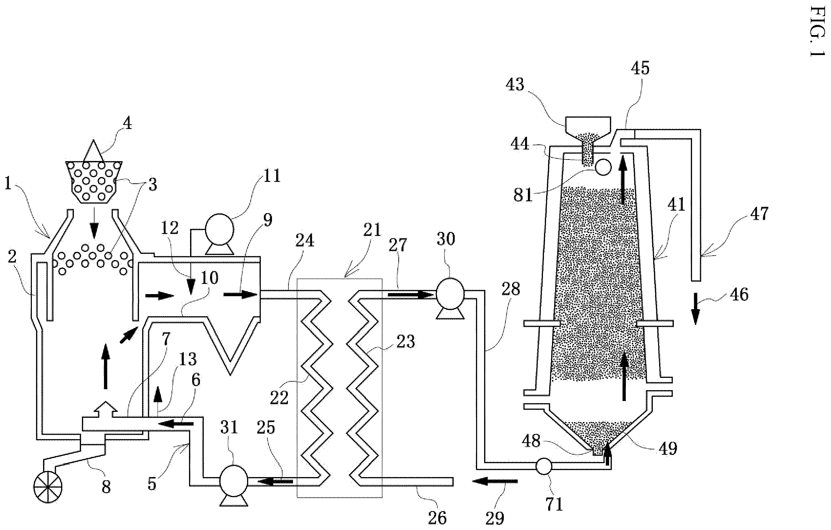

FIG. 1 is a schematic view illustrating the configuration of an example of a production apparatus for carrying out a method for producing quick lime using a coke dry quenching equipment and a heat exchanger according to the invention. In the example shown in FIG. 1, the production apparatus for quick lime according to the invention comprises a coke dry quenching equipment 1, a heat exchanger 21 and a vertical furnace 41 as a lime firing furnace.

In the coke dry quenching equipment 1 shown in FIG. 1, numeral 2 is a cooling tower, numeral 3 is red-hot coke transferred from a coke furnace (not shown), numeral 4 is a coke baguette for transferring the red-hot coke 3 to a tower portion of the cooling tower 2 and feeding into the cooling tower 2, numeral 5 is a first circulating gas feeding pipe for feeding a cooled circulating gas 6 from a lower portion of the cooling tower 2 to cool the red-hot coke 3, numeral 7 is a circulating gas feeding pipe for feeding the cooled circulating gas 6 from the circulating gas feeding pipe 5 to the interior of the cooling tower 2, numeral 8 is a coke discharge section disposed in the bottom potion of the cooling tower 2 for taking the coke after the cooling out from the cooling tower 2, numeral 9 is a heated circulating gas obtained by heating the cooled circulating gas 6 using sensible heat of the red-hot coke 3 at the upper portion of the cooling tower 2, numeral 10 is a circulating gas discharge section for discharging the heated circulating gas 9 from the cooling tower 2 to the outside, numeral 11 is a blower for feeding air 12 to the circulating gas discharge section 10, and numeral 13 is a circulating gas discharge port for discharging the circulating gas located in the first circulating gas feeding pipe to the outside as required.

In the heat exchanger 21 shown in FIG. 1, numeral 22 is a heat medium pathway and numeral 23 is a refrigerant pathway. The heated circulating gas 9 is fed from the circulating gas discharge section 10 of the coke dry quenching equipment 1 to an inlet of the heat medium pathway 22 in the heat exchanger 21 through a second circulating gas feeding pipe 24. Also, a cooled circulating gas 25 discharged from an outlet of the heat medium pathway 22 is returned to the cooling tower 2 through the first circulating gas feeding pipe 5 and used to cool the red-hot coke 3 in the cooling tower 2. Further, air 29 fed from an air feeding section 26 to an inlet of the refrigerant pathway 23 is heated by sensible heat of the heated circulating gas 9 in the heat medium pathway 22 to produce a heated gas 27. The heated gas 27 is fed to the outside through a heated gas feeding pipe 28. Moreover, numeral 30 is a blower for feeding air 29 to the refrigerant pathway of the heat exchanger 21 and feeding the heated gas 27 to the outside. The blower may be arranged at an inlet side of the air feeding section 26. A heating burner 71 is disposed in the heated gas feeding pipe 28 to further heat the heated gas 27. The vertical furnace 41 is lined with refractory, and the furnace body itself is made of steel and can be increased in size. The vertical furnace 41 includes Beckenbach furnace and Merz furnace.

In the example shown in FIG. 1, a thermometer and an exhaust gas concentration meter 81 (O₂, CO, CO₂ and H₂ are measurable) are arranged in the upper portion of the vertical furnace. The temperature controllability by the heating burner is improved by controlling combustion quantity of the heating burner in accordance with the temperature and the exhaust gas concentration.

Concretely, a CO₂ concentration is measured at the upper portion of the lime firing furnace (space in an upper portion of a limestone filled layer), and a CO₂ flow rate (Nm³/h) can be calculated from a gas flow rate (e.g. gas flow rate at a standard state per time Nm³/h) and the CO₂ concentration at the position. Since CO₂ is generated in the production of quick lime from limestone, there is a correlation between the production amount of quick lime per unit time and the amount of CO₂ discharged from the lime firing furnace. To estimate the production amount of quick lime allows the decomposition rate of limestone to be estimated. Thus, when the decomposition rate is lower than the target value, the combustion quantity of the heating burner can be controlled so as to raise the temperature of the gas introduced into the lime firing furnace. Since the invention uses the exhaust heat obtained from the coke dry quenching equipment, the resulting heat quantity may be varied in accordance with the operation of the coke dry quenching equipment. Therefore, it is preferable to control the combustion by the heating burner based on the CO₂ flow rate in the upper portion of the lime firing furnace.

The combustion by the heating burner can be controlled in accordance with the temperature at the upper portion of the lime firing furnace. This knowledge is based on the correlation between the temperature at the upper portion of the lime firing furnace and the decomposition rate of limestone. For example, when the temperature at the upper portion of the lime firing furnace is lower than the target value, the control can be performed so as to increase the combustion quantity by the heating burner.

In the example shown in FIG. 1, a blower 31 for feeding a circulating gas is disposed in the first circulating gas feeding pipe 5. The cooled circulating gas 6, heated circulating gas 9 and cooled circulating gas 25 are circulated between the coke dry quenching equipment 1 and the heat exchanger 21 by the action of the blower 31. Moreover, it is preferable to separate and remove coke in the heated circulating gas 9 by passing the heated circulating gas 9 after the cooling of the red-hot coke 3 through a dust collector. It is preferable to dispose the dust collector at a position after the circulating gas is discharged from CDQ and before the circulating gas reaches the inlet of the heat exchanger, which is preferable in a point of preventing the abrasion of the heat exchanger by coke powder.

In the vertical furnace 41 shown in FIG. 1, the heated gas 27 is fed from the heated gas feeding pipe 28 of the heat exchanger 21 to the bottom of the vertical furnace 41. Numeral 43 is a lime feeding section for feeding limestone 44 (CaCO₃) from a furnace top of the vertical furnace 41 into the inside thereof, and numeral 45 is a gas discharge section for discharging a cooled gas 46 after the thermal decomposition of the limestone 44 with the heated gas 27 toward the outside of the furnace, and numeral 48 is a quick lime discharge section disposed in the bottom of the vertical furnace 41 for taking out quick lime 49 (CaO) produced by the thermal decomposition of the limestone 44 toward the outside of the furnace.

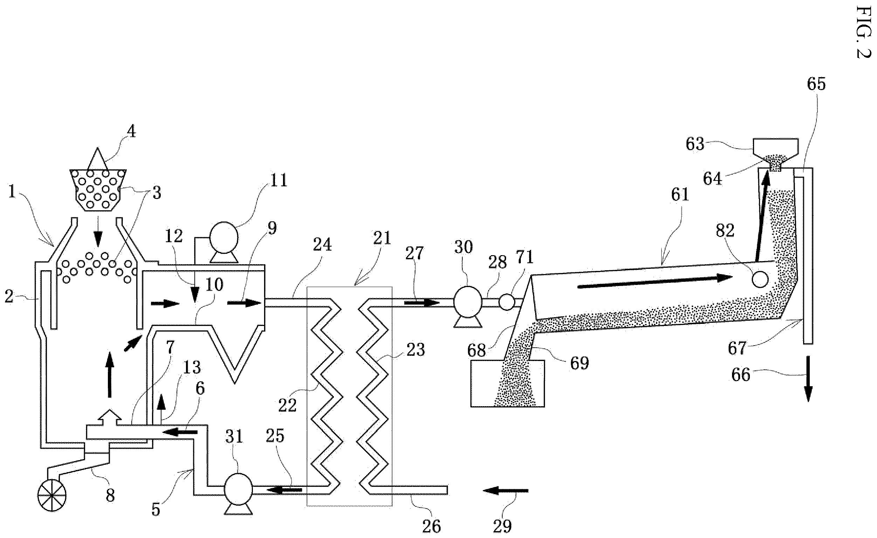

FIG. 2 is a schematic view illustrating the configuration of another example of a production apparatus for carrying out a method for producing quick lime with a coke dry quenching equipment and a heat exchanger according to the invention. In the example shown in FIG. 2, the production apparatus for quick lime according to the invention comprises a coke dry quenching equipment 1, a heat exchanger 21 and a rotary kiln furnace 61 as a lime firing furnace.

The configurations of the coke dry quenching equipment 1 and the heat exchanger 21 shown in FIG. 2 are the same as the those of the coke dry quenching equipment 1 and the heat exchanger 21 explained in FIG. 1. Thus, they are represented by the same symbols as in FIG. 1, and the explanation thereof is omitted. Similarly, other configuration members in FIG. 2, when being the same as those described in FIG. 1, are allocated with the same symbols as in the example of FIG. 1, and the explanations thereof are omitted.

In a rotary kiln furnace 61 shown in FIG. 2, the heated gas 27 is fed from the heated gas feeding pipe 28 of the heat exchanger 21 to the lower end portion of the rotary kiln furnace 61. Numeral 63 is a lime feeding section for feeding limestone 64 (CaCO₃) from a furnace top of the rotary kiln furnace 61 into the interior thereof, and numeral 65 is a gas discharge section for discharging a cooled gas 66 after the thermal decomposition of the limestone 64 with the heated gas 27 toward the outside of the furnace, and numeral 68 is a quick lime discharge section disposed in a lower end portion of the rotary kiln furnace 61 to take out quick lime 69 (CaO) produced by the thermal decomposition of the limestone 64. In the heated gas feeding pipe 28, a heating burner 71 for heating the heated gas 27 is disposed. The rotary kiln furnace 61 is made of a circular steel shell lined with refractory, and rotates around a shaft at a constant speed to operate firing.

In the example shown in FIG. 2, a thermometer and an exhaust gas concentration meter 82 (O₂, CO, CO₂ and H₂ are measurable) are arranged in the rotary kiln furnace 61. A temperature controllability of the heating burner is improved by controlling a combustion quantity of the heating burner in accordance with the temperature and the exhaust gas concentration. The thermometer and the exhaust gas concentration meter are preferable to be disposed in a space where gas is distributed in the vicinity of a limestone charging section in the rotary kiln furnace 61. For example, they are preferable to be disposed within 50 cm from an end near to the limestone charging section in the rotary body of the rotary kiln furnace 61. Also, they may be arranged in a discharge section 65 for a cooled gas from the rotary kiln furnace 61. The controlling method using the exhaust gas concentration meter and thermometer is same as in the example of FIG. 1.

In the examples shown in FIGS. 1 and 2, the red-hot coke 3 of about 1000°C carbonized in the coke furnace is charged into a prechamber at an upper portion of the cooling tower 2 in the coke dry quenching equipment 1. The red-hot coke 3 in the cooling tower 2 is cooled to about 200 °C by the cooled circulating gas 6. On the other hand, the temperature of the cooled circulating gas 6 is raised to about 800 to 900 °C by sensible heat of the red-hot coke 3 to produce the heated circulating gas 9. The temperature can be further raised by blowing air by the blower 11 to burn combustible gas ingredient in the heated circulating gas 9. The sensible heat of the heated circulating gas 9 that has left the cooling tower 2 is used to heat air in the heat exchanger 21, whereby air becomes a heated gas 27 of about 700°C. Furthermore, the heated gas is heated to not lower than 800°C by the heating burner 71. In this case, air of not lower than 800°C can be obtained depending on the operation conditions of the coke dry quenching equipment 1 without using the heating burner 71.

The heated gas 27 from the heat exchanger 21 is used in the lime firing furnace, concretely in the vertical furnace 41 in FIG. 1 and the rotary kiln furnace 61 in FIG. 2 to thermally decompose the limestone and produce quick lime. Thus, quick lime can be produced by making the most of the sensible heat of the red-hot coke 3.

In the examples shown in FIGS. 1 and 2, quick lime is produced from limestone by using the sensible heat of the red-hot coke recovered in the coke dry quenching equipment, so that it becomes possible to use a great amount of sensible heat as compared to Patent Literature 1 which performs the charging into the prechamber. Also, since the cooling of coke and the production of quick lime are conducted independently, there is no need to conduct the separation between the coke and quick lime. Furthermore, the sensible heat of the red-hot coke can be used effectively by again using the circulating gas for producing the heated gas 27 in the heat exchanger 21 as a circulating gas for the cooling in the coke dry quenching equipment.

### Examples

Based on a method for producing quick lime using a coke dry quenching equipment and a heat exchanger of the invention, quick lime is produced by using a production apparatus having a configuration shown in FIG. 1, under operation conditions of Invention Example 1, Invention Example 2, Invention Example 3, Invention Example 4 and Comparative Example 1. The thermal energy balance when quick lime is produced by thermal decomposition of limestone is described below.

When considering a case of using sensible heat of a circulating gas after the cooling of coke of 228 kcal/Nm³ (180°C to 850°C) with respect to heat quantity required for a thermal decomposition reaction (CaCO₃ → CaO + CO₂) of CaCO₃ in limestone of 766 kcal/kg-CaO, quick lime producible per 1 Nm³ of the circulating gas is 228/766 = 0.297 kg-CaO/Nm³ at maximum.

### <Invention Example 1>

Based on a method for producing quick lime using a coke dry quenching equipment and a heat exchanger according to the invention, quick lime is produced by using the apparatus in FIG. 1 and without using the heating burner 71, in a coke dry quenching equipment having a coke throughput of 68 t/hr and a circulating gas flow rate of 84000 Nm³/hr. As a result, the production amount of quick lime is 15 t/hr.

### <Invention Example 2>

Based on a method for producing quick lime using a coke dry quenching equipment and a heat exchanger according to the invention, quick lime is produced by using the apparatus in FIG. 1 and without using the heating burner 71, in a coke dry quenching equipment having a coke throughput of 86 t/hr and a circulating gas flow rate of 106000 Nm³/hr. As a result, the production amount of quick lime is 20 t/hr.

### <Invention Example 3>

Based on a method for producing quick lime using a coke dry quenching equipment and a heat exchanger according to the invention, quick lime is produced by using the apparatus of FIG. 2 and without using the heating burner 71, in a coke dry quenching equipment having a coke throughput of 68 t/hr and a circulating gas flow rate of 84000 Nm³/hr. As a result, the production amount of quick lime is 14 t/hr.

### <Invention Example 4>

Based on a method for producing quick lime using a coke dry quenching equipment and a heat exchanger according to the invention, quick lime is produced by using the apparatus in FIG. 1 and raising a gas fed to the lime firing furnace to 900°C with the heating burner, in a coke dry quenching equipment having a coke throughput of 68 t/hr and a circulating gas flow rate of 84000 Nm³/hr. As a result, the production amount of quick lime is 16 t/hr.

### <Comparative Example 1>

When coke and quick lime are produced by charging limestone together with red-hot coke into a prechamber according to Patent Literature 1, the production amount of quick lime is 4.7 t/hr per coke of 100 t/hr.

As seen from the above results, the production amount of quick lime per 1 t of coke can be increased in all of Invention Examples as compared to Comparative Example 1. Also, it is not necessary to perform combustion by supplying a fuel from the outside in the production of quick lime from limestone, and sensible heat of red-hot coke can be utilized effectively.

### Industrial Applicability

The method and apparatus for producing quick lime with a coke dry quenching equipment and a heat exchanger according to the invention makes it possible to conduct an excellent operation from a viewpoint of thermal efficiency as compared to the conventionally known production of quick lime and are applicable to methods and apparatuses for producing quick lime with various device arrangements.

### Reference Signs List

- 1: coke dry quenching equipment
- 2: cooling tower
- 3: red-hot coke
- 4: coke baguette
- 5: first circulating gas feeding pipe
- 6: cooled circulating gas
- 7: circulating gas feeding pipe
- 8: coke discharge section
- 9: heated circulating gas
- 10: circulating gas discharge section
- 11, 30, 31: blower
- 12, 29: air
- 13: circulating gas discharge port
- 21: heat exchanger
- 22: heat medium pathway
- 23: refrigerant pathway
- 24: second circulating gas feeding pipe
- 25: cooled circulating gas
- 26: air feeding section
- 27: heated gas
- 28: heated gas feeding pipe
- 41: vertical furnace
- 43, 63: lime feeding section
- 44, 64: limestone
- 45, 65: gas discharge section
- 46, 66: cooled gas
- 48, 68: quick lime discharge section
- 49, 69: quick lime
- 61: rotary kiln furnace
- 71: heating burner
- 81, 82: thermometer and exhaust gas concentration meter

## Claims

1. A method for producing quick lime using a coke dry quenching equipment and a heat exchanger, **characterized in that**
the quick lime is produced by
feeding a heated circulating gas that has been heated by cooling a red-hot coke in the coke dry quenching equipment to the heat exchanger,
heating air using the heated circulating gas by the heat exchanger to produce a heated gas, and
feeding the heated gas to a lime firing furnace to conduct thermal decomposition of limestone by the heated gas, and also that
a cooled circulating gas obtained by the cooling of the heated circulating gas by the heating of air in the heat exchanger is fed to the coke dry quenching equipment and used to cool the red-hot coke.

2. The method for producing quick lime using a coke dry quenching equipment and a heat exchanger according to claim 1, wherein
the heated gas heated by the heated circulating gas in the heat exchanger is heated by a heating burner.

3. The method for producing quick lime using a coke dry quenching equipment and a heat exchanger according to claim 2, wherein
the heated gas heated by the heated circulating gas in the heat exchanger is heated by the heating burner based on a ratio of O₂ concentration, CO concentration, CO₂ concentration and H₂ concentration in an exhaust gas disposed in the lime firing furnace.

4. The method for producing quick lime using a coke dry quenching equipment and a heat exchanger according to claim 2, wherein
the heated gas heated by the heated circulating gas in the heat exchanger is heated by the heating burner based on a temperature of the exhaust gas disposed in the lime firing furnace.

5. The method for producing quick lime using a coke dry quenching equipment and a heat exchanger according to any one of claims 1 to 4, wherein
the heated circulating gas after the cooling of the red-hot coke is passed through a dust collector.

6. The method for producing quick lime using a coke dry quenching equipment and a heat exchanger according to any one of claims 1 to 5, wherein
the lime firing furnace is a vertical furnace or a rotary kiln furnace.

7. An apparatus for producing quick lime using a coke dry quenching equipment and a heat exchanger, comprising
a coke dry quenching equipment for discharging a heated circulating gas that has been heated by cooling a red-hot coke,
a heat exchanger for heating air by the discharged heated circulating gas to produce a heated gas and cooling the heated circulating gas by the heating of air to produce and discharge a cooled circulating gas, and
a lime firing furnace for thermally decomposing limestone by the heated gas produced in the heat exchanger to produce quick lime, **characterized in that**
the cooled circulating gas discharged from the heat exchanger is again used to cool the red-hot coke in the coke dry quenching equipment.

8. The apparatus for producing quick lime using a coke dry quenching equipment and a heat exchanger according to claim 7, wherein
the heated gas heated by the heated circulating gas in the heat exchanger is heated by a heating burner and fed to the lime firing furnace.

9. The apparatus for producing quick lime using a coke dry quenching equipment and a heat exchanger according to claim 7 or 8, wherein
the heated circulating gas after the cooling of the red-hot coke is passed through a dust collector.

10. The apparatus for producing quick lime using a coke dry quenching equipment and a heat exchanger according to any one of claims 7 to 9, wherein
the lime firing furnace is a rotary kiln furnace or a vertical furnace.
